Europäisches Patentamt

(19) European Patent Office

Office européen des brevets

(11) Publication number: **0 207 671**
**B1**

(12) **EUROPEAN PATENT SPECIFICATION**

(45) Date of publication of patent specification: **16.05.90**

(51) Int. Cl.⁵: **F 02 B 37/12**

(21) Application number: **86304549.8**

(22) Date of filing: **13.06.86**

(54) A variable inlet area turbine turbocharger.

(30) Priority: **19.06.85 GB 8515502**

(43) Date of publication of application:
**07.01.87 Bulletin 87/02**

(45) Publication of the grant of the patent:
**16.05.90 Bulletin 90/20**

(84) Designated Contracting States:
**DE FR GB SE**

(56) References cited:
**GB-A-2 039 610**
**US-A-3 233 403**
**US-A-4 283 912**
**US-A-4 292 807**
**US-A-4 336 688**

**PATENT ABSTRACTS OF JAPAN, vol. 8, no. 40
(M-278)1477r, 21st February 1984; & JP-A-58
195 023 (NIPPON JIDOSHA BUHIN SOGO
KENKYUSHO K.K.) 14-11-1983**

(73) Proprietor: **HOLSET ENGINEERING COMPANY
LIMITED
P.O. Box A9
Turnbridge Huddersfield, HD1 6RD (GB)**

(72) Inventor: **Franklin, Philip Clive
3 Marten Drive
Netherton Huddersfield HD4 7JX (GB).**

(74) Representative: **Allman, Peter John et al
MARKS & CLERK Suite 301 Sunlight House Quay
Street
Manchester M3 3JY (GB)**

Courier Press, Leamington Spa, England.

## Description

This invention relates to a variable inlet area turbine turbocharger.

Various proposals have been made for varying the effective inlet area of the turbine of a turbocharger for an internal combustion engine. Typically these proposals provide that at low engine speed or low turbocharger compressor output pressure (boost pressure) the effective turbine inlet area is decreased to increase the velocity of the exhaust gas entering the turbine wheel, and that at high engine speed or high boost pressure the effective turbine inlet area is increased to reduce the velocity of the exhaust gas entering the turbine wheel.

Published European Patent Specification Nos. EP—A—0080810, EP—A—0095853 and EP—A—0131406 describe mechanisms which vary the effective inlet area of a turbocharger turbine by displacement of a movable member which forms one side wall of the turbine nozzle array. Displacement of the movable member may be in response to an engine operating parameter such as engine speed or boost pressure or a combination of such parameters. One or more actuators connected to the movable member move the member between maximum area and minimum area positions. A pre-loading spring may be conveniently arranged to bias the movable member towards the minimum area condition, the member being moved towards the maximum area condition by fluid pressure acting against a diaphragm within the actuator to overcome the bias of the spring. The fluid pressure may be provided by air from the turbocharger compressor outlet or air from an external source such as an engine driven compressor.

For such systems to function satisfactorily it is necessary to control the displacement of the movable member as a function of one or more engine operating parameters to achieve an effective turbine inlet area which optimizes engine performance throughout the engine operating speed and load range.

A partial form of control is achieved by what are referred to as boost control systems in which the effective turbine inlet area is varied in proportion to the turbocharger compressor outlet pressure. In the simplest form this may be achieved by admitting the compressor outlet pressure directly to a spring pre-loaded diaphragm actuator. By suitable sizing of the diaphragm and spring the system is substantially self-regulating giving good engine transient response. However, such a system is not responsive to either engine speed or engine load and does not give the turbine inlet area that produces the most efficient operation of the engine under all operating conditions.

A more complex control system is described in European Patent Application No. EP—A—0136858 in which means are provided for varying the effective turbine inlet area as a function of engine rpm. At high rpms the effective inlet area is maintained substantially in its maximum area condition, at low rpms the effective inlet area is maintained substantially in its minimum area condition, and at intermediate rpms the effective inlet area increases with increases in engine rpm. A signal representing the actual effective inlet area is fed back tok the inlet area controlling actuator and the position of the actuator is corrected by the feedback signal to achieve a predetermined effective inlet area.

Although the above system provides optimum control under certain operating conditions it does have some drawbacks. The transient response is not as good as that obtained using simple compressor boost pressure systems, and the effective inlet area is varied irrespective of engine load. The system is also complicated and, as a result, suffers from a high manufacturing cost. At low boost pressures it is also possible for exhaust gas to flow through the actuator and overheat the actuator diaphragm.

It is known from published European Patent Specification No EP—A—0108905 to provide a bypass conduit between the turbine inlet and compressor outlet of a turbocharger, the bypass incorporating a non-return valve which permits gas flow only from the compressor to the turbine inlet. The inlet area of the turbine is however not controlled by the pressure in the bypass conduit which is provided to improve low speed running rather than to control turbine inlet area.

U.S. Patent Specification No. 4499731 describes a turbocharger in which a conduit is provided between the turbine inlet and the compressor outlet, the conduit incorporating a non-return valve. This arrangement is provided to avoid surging of the compressor at low gas flow rates. The turbine inlet area is not a function of the pressure in the conduit.

U.S. Patent Specification No. US—A—4292807 discloses a variable inlet area turbine turbocharger for an internal combustion engine. The turbocharger comprises a turbine having an inlet and an outlet, a compressor driven by the turbine and having an inlet and an outlet, and means for controlling the turbine inlet area as a function of a control pressure signal such that the turbine inlet area increases as a direct function of the control pressure signal. The control pressure signal is a function of the combination of the compressor outlet pressure and the turbine inlet pressure rather than one or other of the pressures.

U.S. Patent Specification No. US—A—4336688 describes an arrangement in which a control pressure determines the position of a wastegate valve. The control pressure is a combination of the turbine inlet pressure and the compressor outlet pressure, except when a check valve closes. The point at which the check valve operates is determined by a check valve spring. Thus the system does not select one or other of the turbine inlet pressure and the compressor outlet pressure to determine the control pressure.

It is an object of the present invention to provide an improved variable turbine inlet area turbocharger.

According to the present invention, there is provided a variable inlet area turbine turbocharger for an internal combustion engine, the turbocharger comprising a turbine having an inlet and an outlet, a compressor driven by the turbine and having an inlet and an outlet, and actuating means for controlling the turbine inlet area, the actuating means being responsive to a control pressure signal such that the turbien inlet area increases as a direct function of the control pressure signal, characterised in that means are provided to selectively adjust the control pressure signal to correspond to whichever is the greater of the turbine inlet pressure and the compressor outlet pressure, the actuating means comprises a housing divided by a movable wall into a first variable volume chamber to which the control pressure signal is applied and a second variable volume chamber on the opposite side of the movable wall to the first variable volume chamber, the second variable volume chamber is connected to the outlet of the compressor, and means are provided to limit the pressure in the second variable volume chamber to a predetermined maximum level.

Preferably, a first conduit connects the first variable volume chamber to the turbine inlet, and a second conduit connects the first variable volume chamber to the compressor outlet, the second conduit incorporating a non-return valve which closes when the pressure on the side of the valve remote from the first variable volume chamber is less than the pressure on the other side of the valve.

The movable wall may be defined on one side of a spring pre-loaded diaphragm. The diaphragm may be connected to an actuator which extends through the first variable volume chamber wall to an inlet area control mechanism, the first conduit being formed at least in part by a passageway through which the actuator extends.

By connecting the actuator to both the compressor outlet pressure and to the turbine inlet pressure the system becomes responsive to a wider range of engine rpm and load combinations than for systems operated by compressor outlet pressure alone. This is because at low engine load, high rpm operating conditions the turbine inlet pressure can increase to higher values than the compressor outlet pressure. Connecting the turbine inlet pressure to the actuator enables this characteristic to be used to increase the turbine effective inlet area at high engine rpm and low engine load operating conditions and thereby reduce pumping losses.

Means may be provided for connecting a source of high-pressure air from an external source to the first variable volume chamber when the engine speed exceeds a predetermined threshold. This maintains the turbine inlet area at its maximum. Below the predetermined threshold the external source will be disconnected from the first variable volume chamber in normal circumstances, although if for example an exhaust brake is fitted to the engine it may be desirable to supply air from the external source to the actuator when the exhaust brake is operated.

A third conduit may be provided connecting the compressor outlet to the side of the diaphragm remote from the first variable volume chamber. A pressure regulator is provided in the third conduit to set the predetermined maximum level. The pressure supplied to the diaphragm via the regulator effectively pre-loads the diaphragm. Thus, when the compressor output pressure is less than the regulated pressure the turbine inlet area effectively decreases as the compressor output pressure increases, assuming a constant turbine inlet pressure. This provides an additional degree of freedom to the system designer when determining the relationship between turbine inlet area, compressor outlet pressure and turbine inlet pressure.

An embodiment of the present invention will now be described by way of example with reference to the accompanying drawings, in which:

Fig. 1 is a schematic illustration of an embodiment of the present invention;

Fig. 2 illustrates the variation in inlet area with respect to compressor outlet pressure (boost pressure) and turbine inlet pressure in an arrangement in accordance with the prior art;

Fig. 3 illustrates the variation in inlet area with respect to boost pressure and turbine inlet pressure in accordance with an embodiment of the invention which is a modification of that shown in Fig. 1; and

Fig. 4 illustrates the variation in inlet area with respect to boost pressure and turbine inlet pressure in the embodiment of the invention illustrated in Fig. 1.

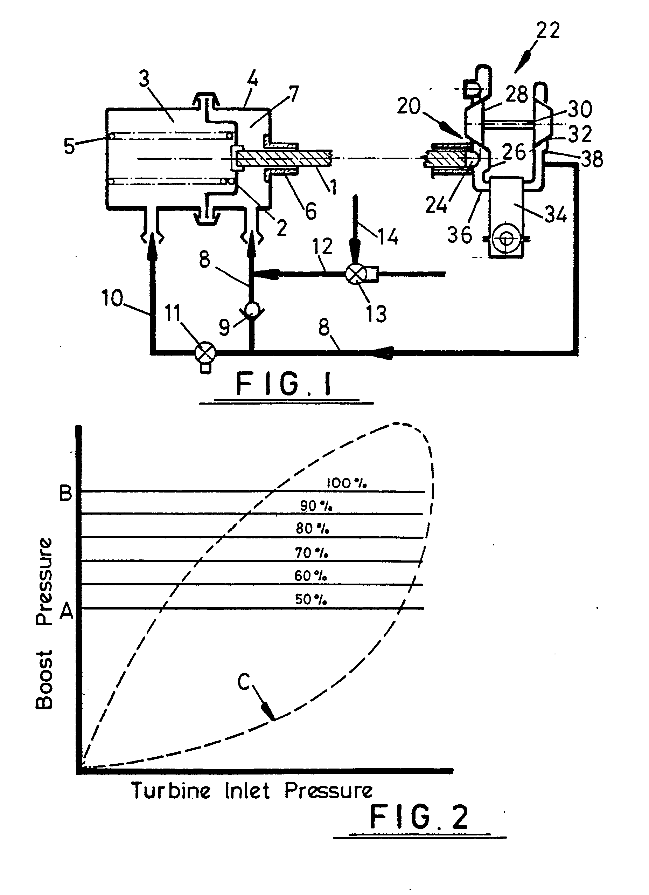

Referring to Fig. 1, an actuator rod 1 is connected to a flexible diaphragm 2 secured between component parts 3 and 4 of a diaphragm housing. The end of the actuator rod 1 remote from the diaphragm 2 is secured to a mechanism 20 for controlling the turbine inlet area of a turbocharger 22 to which the device is fitted. The mechanism attached to the rod 1 may be of the type illustrated for example in published European Specification No. EP—A—0080810 although it will be appreciated that any suitable turbine inlet area adjusting mechanism could be actuated by the rod 1 such as an annular ring 24 displaceable into a turbine inlet housing 26 that surrounds a turbine wheel 28 of the turbocharger. The turbine wheel is journalled in the turbocharger by a shaft 30, which also connects to and journals a compressor wheel 32. Exhaust gases from an internal combustion engine 34 pass through a manifold 36 and across the turbine 28 thereby rotating it so that the compressor wheel pressurizes air for delivery through a compressor outlet 38 to the internal combustion engine.

A pre-loading spring 5 is positioned between the diaphragm 2 and the housing component 3 so as to urge the diaphragm and the rod 1 to the right in Fig. 1.

The rod 1 extends through a sleeve 6 which defines a restricted passageway around the rod 1 which communicates at one end with a chamber 7 defined between the diaphragm 2 and the housing component 4 and at the other end with the turbine inlet housing 26. Thus the passageway defined by the sleeve 6 around the rod 1 constitutes a first conduit through which gas may flow to and from the chamber 7.

The chamber 7 is connected by a second conduit 8 to the turbocharger compressor outlet 38. A non-return valve 9 is provided in the conduit 8 such that the non-return valve 9 closes when the pressure in the conduit 8 on the side of the valve 9 adjacent the chamber 7 exceeds the pressure in the conduit 8 on the other side of the valve 9. When the valve 9 is open the pressure within chamber 7 is substantially the same as the compressor outlet pressure. When the valve 9 is closed the pressure in chamber 7 corresponds to the turbine inlet pressure. The position of the rod 1 and hence the inlet area of the turbine is a function of the differential pressure across the diaphragm 2 and the spring constant and preload of the pre-loading spring 5.

Referring now to Fig. 2, this shows a simple graphical representation of the variation in turbine inlet area with respect to boost pressure (that is compressor outlet pressure) and turbine inlet pressure which would apply if in accordance with prior art arrangements the chamber 7 was isolated from the turbine inlet pressure and the non-return valve 9 was omitted. Boost pressure A corresponds to the boost pressure at peak torque when the actuating mechanism has reduced the inlet area to 50% of its maximum. Boost pressure B. corresponds to an intermediate pressure which is for example 0.2 bar above boost pressure A and corresponds to movement of the actuator mechanism so as to provide maximum turbine inlet area. Variations in pressure above pressure B or below pressure A do not affect the turbine inlet area. Between pressures A and B there is a linear change in the turbine inlet area with changes in the boost pressure. The typical engine operating envelope is indicated by dashed line C. Thus it can be seen that with a simple control of turbine inlet area in dependence upon the boost pressure only the system is relatively inflexible to changes in engine load and/or turbine inlet pressure.

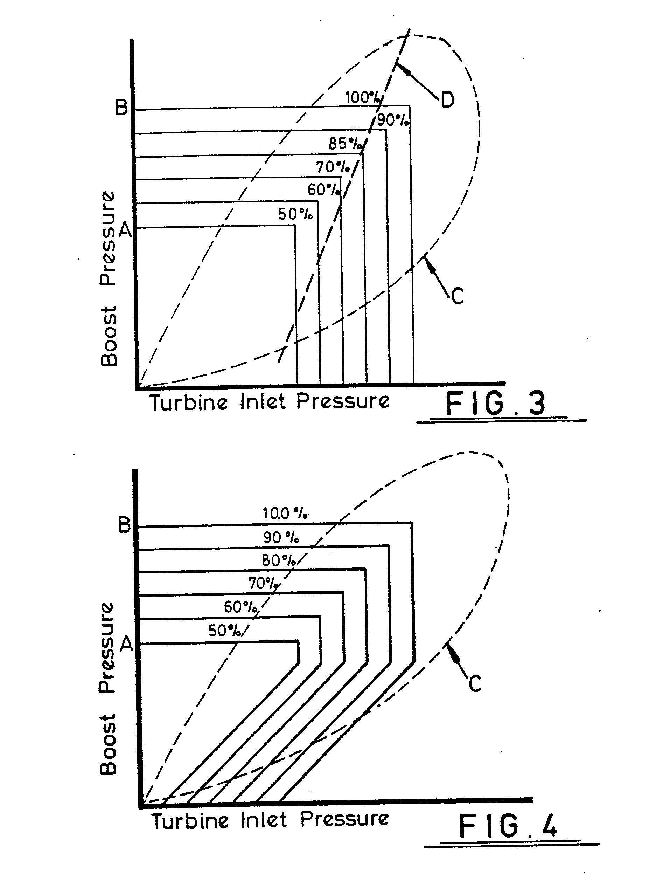

Looking now at Fig. 3 this is an equivalent illustration to that of Fig. 2 but illustrating the effect on the turbine inlet area of connecting the chamber 7 of Fig. 1 to the turbine inlet pressure via the member 6 and the provision of the non-return valve 9. It can be seen that in low load conditions the control of turbine inlet area is a function of the turbine inlet pressure rather than the boost pressure. The line D indicates a typical engine rpm line.

Referring again to Fig. 1, a third conduit 10 is connected between the conduit 8 which carries the compressor output pressure and the side of the diaphragm 2 remote from the chamber 7. A pressure regulator 11 is connected in conduit 10 so that the pressure in conduit 10 corresponds to the compressor output pressure until that output pressure exceeds a predetermined threshold whereafter the pressure within conduit 10 is held at a predetermined level by the regulator 11. The pressure in conduit 10 thus effectively provides pre-loading to the diaphragm 2 which corresponds precisely with the function of the pre-loading spring 5 so long as the pressure in conduit 10 is at the predetermined level determined by the regulator 11 but the characteristic response of the device is changed when the pressure in conduit 10 corresponds to the pressure in conduit 8. The spring 5 may be dispensed with or reduced in strength to compensate for the fact that some pre-loading is provided by the pressure delivered via conduit 10.

Referring now to Fig. 4, this is an illustration equivalent to those of Figs. 2 and 3 but illustrating the effect on turbine inlet area when the conduit 8 and valve 9 and the conduit 10 and regulator 11 are both provided. It will be seen that at low boost pressures when the regulator 11 is operating beneath its predetermined threshold the turbine inlet area increases more rapidly with turbine inlet pressure in the case of Fig. 4 than in the case of Fig. 3.

Referring again to Fig. 1, a further feature of the illustrated arrangement is a conduit 12 which connects the conduit 8 on the side of the non-return valve 9 adjacent the chamber 7 to a solenoid controlled valve 13 which when operated connects the conduit 12 to a conduit 14 that in turn is connected to an external supply of pressurised air, for example an engine driven compressor. A control device can be provided (not shown) which monitors engine rpm and opens the valve 13 when a predetermined rpm is exceeded. This then supplies high pressure air via conduits 14, 12 and 8 to the chamber 7 causing the turbine inlet area to be increased to its maximum extent. Thus it is possible to override the relationship between turbine inlet area, boost pressure and turbine inlet pressure when a predetermined engine speed is exceeded.

As shown in Fig. 1 the turbine inlet pressure may be conveniently admitted to the chamber 7 through the clearance between the actuator rod 1 and the bearing member 6 which is supported in the diaphragm housing component 4. It should be noted that although this communicates the chamber 7 and thus the diaphragm 2 with hot gases at the turbine inlet the presence of the non-return valve 9 prevents this hot gas from flowing continuously through the chamber 7 even if the turbine inlet pressure is greater than the compressor outlet pressure. Thus, the arrangement ensures that only a very small amount of hot gas is delivered to the chamber 7 and therefore the diaphragm 2 is protected against damage due to overheating. On the other hand when the compressor outlet pressure is greater than the turbine inlet pressure a flow of cooling air is driven through the chamber 7 and thence out through the member 6 to the turbine inlet. Thus the diaphragm is protected against damage due to overheating.

## Claims

1. A variable inlet area turbine turbocharger for an internal combustion engine, the turbocharger comprising a turbine (26, 28) having an inlet and an outlet, a compressor (32, 38) driven by the turbine and having an inlet and an outlet, and actuating means (1, 24) for controlling the turbine inlet area, the actuating means being responsive to a control pressure signal such that the turbine inlet area increases as a direct function of the control pressure signal, characterised in that means (6, 9) are provided to selectively adjust the control pressure signal to correspond to whichever is the greater of the turbine inlet pressure and the compressor outlet pressure, the actuating means comprises a housing (3, 4) divided by a movable wall (2) into a first variable volume chamber (7) to which the control pressure signal is applied and a second variable volume chamber on the opposite side of the movable wall (2) to the first variable volume chamber, the second variable volume chamber is connected to the outlet of the compressor, and means (11) are provided to limit the pressure in the second variable volume chamber to a pre-determined maximum level.

2. A turbocharger according to claim 1, comprising a first conduit (6) connecting the first variable volume chamber (7) to the turbine inlet, and a second conduit (8) connecting the first variable volume chamber to the compressor outlet, the second conduit (8) incorporating a non-return valve (9) which closes when the pressure on the side of the valve remote from the first variable volume chamber is less than the pressure on the other side of the valve.

3. A turbocharger according to claim 2, wherein the movable wall (2) is defined by a pre-loaded diaphragm.

4. A turbocharger according to claim 3, wherein the diaphragm (2) is connected to an actuator (1) which extends through the first variable volume chamber to an inlet area control mechanism (24), the first conduit (6) being formed at least in part by a passageway through which the actuator (1) extends.

5. A turbocharger according to claim 4, comprising means (14) for connecting a source of high pressure air from an external source to the first variable volume chamber when the engine speed exceeds a predetermined threshold.

6. A turbocharger according to claim 3, 4 or 5, comprising a third conduit (10) which connects the compressor outlet to the second variable volume chamber, and a pressure regulator (11) connected in the third conduit, the pressure regulator setting the said predetermined maximum level.

## Patentansprüche

1. Turbinen-Turbolader mit variabler Einlaßfläche für eine Brennkraftmachine, wobei der Turbolader eine Turbine (26, 28) mit einem Einlaß und einem Auslaß, einen von der Turbine angetriebenen und mit einem Einlaß und einem Auslaß versehenen Verdichter (32, 38), und eine Betätigungseinrichtung (1, 24) zur Steuerung der Turbineneinlaßfläche umfaßt, wobei die Betätigungseinrichtung auf ein Steuerdrucksignal so anspricht, daß die Turbineneinlaßfläche sich direkt proportional zum Steuerdrucksignal vergrößert, dadurch gekennzeichnet, daß eine Einrichtung (6, 9) vorgesehen ist, um das Steuerdrucksignal wahlweise so einzustellen, daß es dem jeweils größeren von Turbineneinlaßdruck und Verdichterauslaßdruck entspricht, wobei die Betätigungseinrichtung ein Gehäuse (3, 4) umfaßt, welches mit einer beweglichen Wand (2) in eine erste Kammer (7) mit variablem Volumen, auf welche das Steuerdrucksignal angelegt wird, und eine zweite Kammer mit variablem Volumen auf der der ersten Kammer mit variablem Volumen gegenüberliegenden Seite der beweglichen Wand (2) aufgeteilt ist, daß die zweite Kammer mit variablem Volumen mit dem Verdichterauslaß verbunden ist, und daß eine Einrichtung (11) zur Begrenzung des Druckes in der zweiten Kammer mit variablem Volumen auf einen vorgegebenen Höchstwert vorgesehen ist.

2. Turbolader nach Anspruch 1, welcher einen ersten, die erste Kammer (7) mit variablem Volumen mit dem Turbineneinlaß verbindenden Kanal (6), und einen zweiten, die erste Kammer mit variablem Volumen mit dem Verdichterauslaß verbindenden Kanal (8) umfaßt, wobei der zweite Kanal (8) ein Rückschlagventil (9) beinhaltet, welches schließt, wenn der Druck auf die von der ersten Kammer mit variablem Volumen entfernt liegende Seite des Ventils geringer ist als der Druck auf die andere Seite des Ventils.

3. Turbolader nach Anspruch 2, dadurch gekennzeichnet, daß die bewegliche Wand (2) aus einer vorbelasteten Membran besteht.

4. Turbolader nach Anspruch 3, dadurch gekennzeichnet, daß die Membran (2) mit einem Stellglied (1) verbunden ist, welches sich durch die erste Kammer mit variablem Volumen zu einem Steuermechanismus (24) der Einlaßfläche erstreckt, wobei der erste Kanal (6) zumindest teilweise von einem Durchgang, durch welchen sich das Stellglied (1) erstreckt, gebildet wird.

5. Turbolader nach Anspruch 4, welcher eine Einrichtung (14) zum Verbinden einer Hochdruckluftquelle von außen mit der ersten Kammer mit variablem Volumen umfaßt, wenn die Motordrehzahl einen vorgegebenen Schwellenwert überschreitet.

6. Turbolader nach Anspruch 3, 4 oder 5, welcher einen dritten Kanal (10), welcher den Verdichterauslaß mit der zweiten Kammer mit variablem Volumen verbindet, und einen im dritten Kanal befestigten Druckregler (11) umfaßt, wobei der Druckregler diesen vorgegebenen Höchstwert festlegt.

## Revendications

1. Turbocompresseur à turbine à zone d'entrée de dimension variable pour un moteur à combustion interne, le turbocompresseur comprenant une turbine (26, 28) ayant une entrée et une sortie, un compresseur (32, 38) entraîné par la turbine et ayant une entrée et une sortie, et un moyen d'actionnement (1, 24) pour commander la zone d'entrée de la turbine, le moyen d'actionnement étant sensible à un signal de pression de commande de manière que la zone d'entrée de la turbine augmente en fonction directe du signal de pression de commande, caractérisé en ce qu'un moyen (6, 9) est prévu pour régler de manière sélective le signal de pression de commande pour correspondre à celle de la pression d'entrée de la turbine ou de la pression de sortie du compresseur qui est la plus importante, le moyen d'actionnement comprend un boîtier (3, 4) divisé par une paroi mobile (2) dans une première chambre à volume variable (7) à laquelle le signal de pression de commande est appliqué et une deuxième chambre à volume variable de l'autre côté de la paroi mobile (2) la séparant de la première chambre à volume variable, la seconde chambre à volume variable est reliée à la sortie du compresseur, et un moyen (11) est prévu pour limiter la pression dans la seconde chambre à volume variable à un niveau maximum déterminé.

2. Turbocompresseur selon la revendication 1, comprenant un premier conduit (6) reliant la première chambre à volume variable (7) à l'entrée de la turbine, et un second conduit (8) reliant la première chambre à volume variable à la sortie du compresseur, le second conduit (8) comprenant une soupape de non-retour (9) qui se ferme lorsque la pression du côté de la soupape éloignée de la première chambre à volume variable est inférieure à la pression de l'autre côté de la soupape.

3. Turbocompresseur selon la revendication 2, caractérisé en ce que la paroi mobile (2) est définie par une membrane pré-chargée.

4. Turbocompresseur selon la revendication 3, caractérisé en ce que la membrane (2) est reliée à un dispositif de commande (1) qui s'étend à travers la première chambre à volume variable jusque dans un mécanisme de commande de la zone d'entrée (24), le premier conduit (6) étant formé au moins en partie par un passage à travers lequel s'étend le dispositif de commande (1).

5. Turbocompresseur selon la revendication 4, comprenant un moyen (14) pour relier une source d'air sous haute pression à partir d'une source externe à la première chambre à volume variable lorsque la vitesse du moteur excède un seuil déterminé.

6. Turbocompresseur selon la revendication 3, 4 ou 5, comprenant un troisième conduit (10) qui relie la sortie du compresseur à la deuxième chambre à volume variable, et un régulateur de pression (11) placé dans le troisième conduit, le régulateur de pression fixant ledit niveau maximum déterminé.

FIG. 1

Turbine Inlet Pressure

FIG. 2

EP 0 207 671 B1

Boost Pressure vs Turbine Inlet Pressure

100%
90%
85%
70%
60%
50%

B
A
D
C

**FIG. 3**

Boost Pressure vs Turbine Inlet Pressure

10.0 %
90 %
80 %
70%
60%
50%

B
A
C

**FIG. 4**

2